# EUROPÄISCHE PATENTSCHRIFT

(11) **EP 1 893 896 B1**
(45) Veröffentlichungstag und Bekanntmachung des Hinweises auf die Patenterteilung: **20.01.2010**
(21) Anmeldenummer: 06754365.2
(22) Anmeldetag: 14.06.2006
(51) Int. Cl.: F16H 61/00, F16H 57/04

(54) **ANTRIEBSSTEUERUNGSVORRICHTUNG EINES AUTOMATGETRIEBES FÜR EIN KRAFTFAHRZEUG UND VERFAHREN DAFÜR**
DRIVE CONTROL DEVICE OF AN AUTOMATIC GEARBOX FOR A MOTOR VEHICLE AND METHOD THEREFOR
DISPOSITIF DE COMMANDE D'ENTRAINEMENT DE BOITE DE VITESSES AUTOMATIQUE D'AUTOMOBILE ET PROCEDE CORRESPONDANT

(30) Priorität: 22.06.2005 DE 102005028848
(43) Veröffentlichungstag der Anmeldung: 05.03.2008
(73) Patentinhaber: ZF Friedrichshafen AG, 88038 Friedrichshafen (DE)
(72) Erfinder: SCHIELE, Peter, 88079 Kressbronn (DE); SCHMIDT, Thilo, 88074 Meckenbeuren (DE); STEINHAUSER, Klaus, 88079 Kressbronn (DE)
(86) Internationale Anmeldenummer: PCT/EP2006/005729
(87) Internationale Veröffentlichungsnummer: WO 2006/136320

(56) Entgegenhaltungen:
- EP-A- 1 223 365
- DE-A1- 10 162 973
- DE-A1-102004 012 639

## Beschreibung

Die Erfindung betrifft eine Antriebssteuerungsvorrichtung eines Automatgetriebes für ein Kraftfahrzeug mit einer elektrisch antreibbaren Zusatzölpumpe gemäß Patentanspruch 1 sowie ein diesbezügliches Verfahren gemäß Anspruch 3.

Aus der DE 101 62 973 A1 ist eine Antriebssteuerungsvorrichtung in Verbindung mit einem Automatgetriebe für eine elektrisch antreibbare Zusatzölpumpe bekannt. Dabei wird eine mechanisch vom Verbrennungsmotor antreibbare Hauptölpumpe in Kombination mit einer Motor-Stopp-Automatik (MSA) und der Zusatzölpumpe eingesetzt. Die Zusatzölpumpe ist erforderlich, da die Motor-Stopp-Automatik zum Beispiel bei einem verkehrsbedingten Stillstand des Kraftfahrzeugs den Verbrennungsmotor und damit den Antrieb der Hauptölpumpe abschaltet. Für ein Automatgetriebe ist jedoch ein ausreichender, ölhydraulischer Volumenstrom bzw. Öldruck bereitzustellen, damit zum Beispiel der aktuelle Gang eingelegt bleibt oder die notwendigen Aktuatoren für einen im Stillstand vorgenommenen Gangwechsel betätigt werden können.

Der Antrieb der elektrischen Zusatzölpumpe ist für das elektrische Bordnetz eines Kraftfahrzeuges energetisch ungünstig und verschlechtert dessen Gesamtwirkungsgrad. Zur Verringerung dieser Nachteile wird in der DE 101 62 973 A1 vorgeschlagen, die der elektrisch antreibbaren Zusatzölpumpe zugeführte Betriebsspannung auf der Grundlage der gemessenen Öltemperatur des Automatgetriebes anzupassen. Hierdurch soll der notwendige Hydraulikdruck aufrechterhalten und verhindert werden, dass ein größerer hydraulischer Druck als notwendig zugeführt wird.

Um den Aufwand für eine Zusatzölpumpe gering zu halten, wird in der EP 1 223 365 A2 für eine verkleinerte Ausführungsform dieser Zusatzölpumpe vorgeschlagen, in bestimmten Betriebszuständen zur Aufrechterhaltung des notwendigen Kupplungsdrucks die mechanische und die elektrische Pumpe gemeinsam zu betreiben, und dann, wenn der gemessene Kupplungsdruck einen Wert erreicht, den die mechanisch antreibbare Hauptölpumpe alleine liefern kann, die Zusatzölpumpe sofort abzuschalten.

Der genannte Stand der Technik geht demnach jeweils davon aus, dass der von der mechanisch angetriebenen Hauptölpumpe und/oder der zugeschalteten elektrischen Zusatzölpumpe geförderte Volumenstrom bzw. Öldruck ausreichend für alle auftretenden Betriebszustände ist.

Vor diesem Hintergrund liegt der Erfindung die Aufgabe zugrunde, eine Antriebssteuerungsvorrichtung und ein diesbezügliches Verfahren für ein Automatgetriebe eines Kraftfahrzeugs mit einer mechanisch angetriebenen Hauptölpumpe und einer elektrisch antreibbaren Zusatzölpumpe zu schaffen, welche es ermöglichen, den notwendigen hydraulischen Volumenstrom bzw. Druck in einem erweiterten Betriebsbereich, beispielsweise auch während des Betriebs einer Motor-Stopp-Automatik, zu liefern.

Die Lösung dieser Aufgabe ergibt sich aus den Merkmalen der unabhängigen Patentansprüche 1 und 3. Vorteilhafte Ausgestaltungen und Weiterbildungen der Erfindung sind in den jeweils zugeordneten Unteransprüchen angegeben.

Der Erfindung liegt die Erkenntnis zugrunde, dass es weder zielführend ist, die elektrische Zusatzölpumpe für alle eventuell auftretenden Bedarfssituatonen zu dimensionieren, noch dass es möglich ist, mit einer begrenzt großen elektrischen Zusatzölpumpe alle diese Bedarfsanforderungen befriedigen zu können.

Demnach betrifft die Erfindung zunächst eine Antriebssteuerungsvorrichtung eines Automatgetriebes eines Kraftfahrzeuges, wobei das Kraftfahrzeug ein Automatgetriebe mit einer verbrennungsmotorisch antreibbaren Hauptölpumpe sowie eine elektrisch antreibbare Zusatzölpumpe aufweist, und ausgestattet ist mit einer hydraulischen Steuerungseinrichtung für das Automatgetriebe, mit einer Volumenstrombedarfsermittlungseinrichtung zur Bestim-mung des im aktuellen Betriebszustand des Automatgetriebes und des Kraftfahrzeugs notwendigen ölhydraulischen Soll-Volumenstroms auf der Basis einer Öltemperatur im Automatgetriebe, mit einer Fördervolumenstromermittlungseinrichtung zur Bestimmung des im aktuellen Betriebszustand des Autömatgetriebes und des Kraftfahrzeugs von der Hauptölpumpe und/oder der Zusatzölpumpe förderbaren Ist-Volumenstroms, und mit einer Soll-Volumenstrom-Beeinflussungseinrichtung zur Absenkung des Soll-Volumenstromes zumindest auf den aktuell förderbaren Ist-Volumenstrom, falls der aktuell förderbare Ist-Volumenstrom einen Wert aufweist, der unterhalb des Wertes für den aktuellen Soll-Volumenstrom liegt.

In einer besonders vorteilhaften Variante dieser Antriebssteuerungsvorrichtung weist diese eine Steuerungseinrichtung für eine Motor-Stopp-Automatik zum automatisierten Abstellen des Verbrennungsmotors in bestimmten Betriebszuständen des Kraftfahrzeuges auf.

Die Erfindung betrifft auch ein Verfahren zur Antriebssteuerung eines Automatgetriebes eines Kraftfahrzeuges, wobei das Kraftfahrzeug über ein Automatgetriebe mit einer verbrennungsmotorisch antreibbaren Hauptölpumpe und eine elektrisch antreibbare Zusatzölpumpe verfügt, sowie mit einer hydraulischen Steuerungseinrichtung für das Automatgetriebe ausgestattet ist.
Nach diesem Verfahren ist vorgesehen, dass der in einer aktuellen Betriebssituation notwendige ölhydraulische Soll-Volumenstrom des Automatgetriebes auf der Basis einer Öltemperatur im Automatgetriebe bestimmt wird, dass der von der Hauptölpumpe und/oder der Zusatzölpumpe förderbare Ist-Volumenstrom ermittelt wird, und dass der Wert des Soll-Volumenstromes zumindest auf den aktuell förderbaren Ist-Volumenstrom abgesenkt wird, falls der aktuell förderbare Ist-Volumenstrom einen Wert aufweist, der unterhalb des Wertes für den aktuellen Soll-Volumenstrom liegt.

Die Erfindung beschreitet somit den Weg, in Abhängigkeit von der Lieferfähigkeit der allein oder der gemeinsam arbeitenden Hauptölpumpe bzw. Zusatzölpumpe in die Betriebsstrategie des Automatgetriebes einzugreifen.

Hierfür wird mittels der Volumenstrombedarfsermittlungseinrichtung der aktuelle Versorgungsbedarf mittels eines mathematisch-physikalischen Modells als Soll-Volumenstrom ermittelt. Das Modell berücksichtigt dabei zumindest die Getriebeöltemperatur.

Die Fördervolumenstromermittlungseinrichtung ermittelt beispielsweise ebenfalls modellgesteuert, ob der genannte Bedarf allein durch die verbrennungsmotorisch angetriebene Hauptölpumpe abdeckbar ist, oder ob gegebenenfalls eine Leistungsvorgabe für den Zusatzbedarf an die Steuerung der elektrischen Zusatzölpumpe übermittelt werden muss.

Reicht als Ergebnis des Vergleiches zwischen dem Soll-Volumenstrom und dem von beiden bzw. nur der Zusatzölpumpe förderbaren Volumenstroms letzterer Volumenstrom nicht aus, so werden mittels einer Soll-Volumenstrom-Beeinflussungsvorrichtung Maßnahmen ergriffen, die zu einer Volumenstromverringerung bzw. zu einer Öldruckbedarfsverringerung führen.

Dies hat den Vorteil, dass bei geeigneter Auswahl dieser Maßnahmen durch einen Eingriff in die Regelstrategie des Automatgetriebes für den Fahrzeugführer unmerklich oder nahezu unmerklich der momentane Volumenstrombedarf an Getriebeöl so weit abgesenkt wird, dass dieser mittels der installierten Pumpenkapazitäten erfüllt werden kann. Somit können auch Betriebsbereiche abgedeckt werden, in welchen die installierte Pumpenkapazität gemäß herkömmlicher Antriebssteuerungsvorrichtungen nicht ausreichen würde. Weiterhin kann auf den Verbau von für die meisten Betriebsanforderungen überdimensionierten Pumpenkapazitäten verzichtet werden. Dieses ist kostensenkend sowie verbrauchs- und wirkungsgradgünstig. Die Verwendung eines Modells zur Bestimmung von' Soll-Volumenstrom und/oder des förderbaren Getriebeölvolumenstroms kann eine sonst übliche Drucksensorik überflüssig machen.

In weiterer Ausgestaltung des Verfahrens gemäß der Erfindung kann für eine verfeinerte Erfassung des Soll-Volumenstromes vorgesehen sein, dass dieser neben der Öltemperatur auf der Basis der Drehzahl der mechanisch antreibbaren Hauptölpumpe und/oder auf der Basis des aktuellen Betriebszustandes einer Motor-Stopp-Automatik (beispielsweise Motor an bzw. aus) und/oder auf der Basis der von der hydraulischen Steuervorrichtung durchzuführenden Schaltungen des Automatgetriebes (Hoch- bzw. Rückschaltungen, Schaltungsart) und/oder auf der Basis der notwendigen Kühlung und/oder Schmierung des Automatgetriebes erfolgt. Weitere Eingangsgrößen für die Erfassung des Volumenstrombedarfes sind durchaus möglich, zum Beispiel bei einer getriebegesteuerten Rollverhinderung für das Fahrzeug durch Zuschalten von mehreren Getriebeschaltelementen bei einem sensierten Fahrzeugstillstand.

Zudem kann vorgesehen sein, dass die Steuerungsstrategie der elektrischen Zusatzpumpe auch auf Bereiche außerhalb des eigentlichen Motor-Stopp-Automatik-Betriebs ausgedehnt wird. So kann der hydraulische Versorgungsbedarf zum Beispiel bei Schaltungen in einem niedrigen Drehzahlbereich, also bei entsprechend geringem Förderstrom der mechanisch angetriebenen Hauptölpumpe oder bei hohen Temperaturen mit den damit verbundenen erhöhten Leckageverlusten unterstützt werden.

Auch zeigen herkömmliche mechanisch angetriebene Hauptölpumpen im Hochdrehzahlbereich eine deutliche Volumenstromüberversorgung, welcher oft durch den Einsatz von entsprechend teuren und aufwendigen Verstellpumpen Rechnung getragen wird, insbesondere um die Ölversorgung bei niedrigen Drehzahlen zu gewährleisten.

Ebenso kann die elektrische Zusatzölpumpe für eine Stabilisierung der Druckversorgung zur Verbesserung der Schaltqualität Verwendung finden, da es gelegentlich zu Druckeinbrüchen durch Mangelversorgung mit Öl bei Grenzmustergetrieben, bei hohen Getriebeöltemperaturen oder durch Verschleiß usw. kommen kann.

Vorteilhaft kann die elektrische Zusatzpumpe auch dann zugeschaltet werden, wenn der Kühlölvolumenstrom erhöht werden muss, ohne dafür die Drehzahl des Verbrennungsmotors zu erhöhen, welches ja kontraproduktiv wäre. Dieses wiederum kann zu einer geringer dimensionierten Auslegung der Getriebeölkühlung führen, was hinsichtlich der Kosten und des notwenigen Bauraumes vorteilhaft ist. Zudem bleibt für den Fahrer das Fahrzeugverhalten bzw. das Geräuschverhalten des Verbrennungsmotors nachvollziehbar, wodurch sich der Fahrkomfort und die Kundenakzeptanz gegenüber herkömmlichen Systemen verbessert.

Zur Verdeutlichung der Erfindung ist der Beschreibung eine schematische Zeichnung eines Ausführungsbeispiels beigefügt. Es sei darauf hingewiesen, dass im Rahmen dieser Erfindung unter dem Begriff "Automatgetriebe" sowohl klassische Stufenautomatgetriebe mit hydraulischem Drehmomentwandler, automatisierte Handschaltgetriebe, Doppelkupplungsgetriebe sowie stufenlos verstellbare Getriebe verstanden werden.

In dem vorliegenden Beispiel ist ein Personenkraftwagen mit einem Automatgetriebe und einem dem Antrieb dienenden Verbrennungsmotor ausgestattet. Im Betrieb des Verbrennungsmotors wird von diesem eine dem Automatgetriebe zugeordnete Hauptölpumpe mechanisch angetrieben.

Dem Verbrennungsmotor ist hier zudem eine Motor-Stopp-Automatik (MSA) zugeordnet, welche diesen Motor in bestimmten Betriebszuständen automatisiert abschaltet und beispielsweise bei einem durch eine Fahrpedalauslenkung signalisierten Anfahrwunsch wieder einschaltet. Bei abgeschaltetem Verbrennungsmotor (Motor-Aus-Betrieb) entfällt die Fördermöglichkeit für einen ölhydraulischen Volumenstrom durch die Hauptölpumpe. Um in solchen Motor-Aus-Betriebsphasen die Versorgung mit ölhydraulischem Druck bzw. Volumen, vorrangig für die hydraulische Steuereinrichtung des Automatgetriebes sicherzustellen, ist eine aus dem elektrischen Bordnetz antreibbare elektrische Zusatzölpumpe vorhanden.

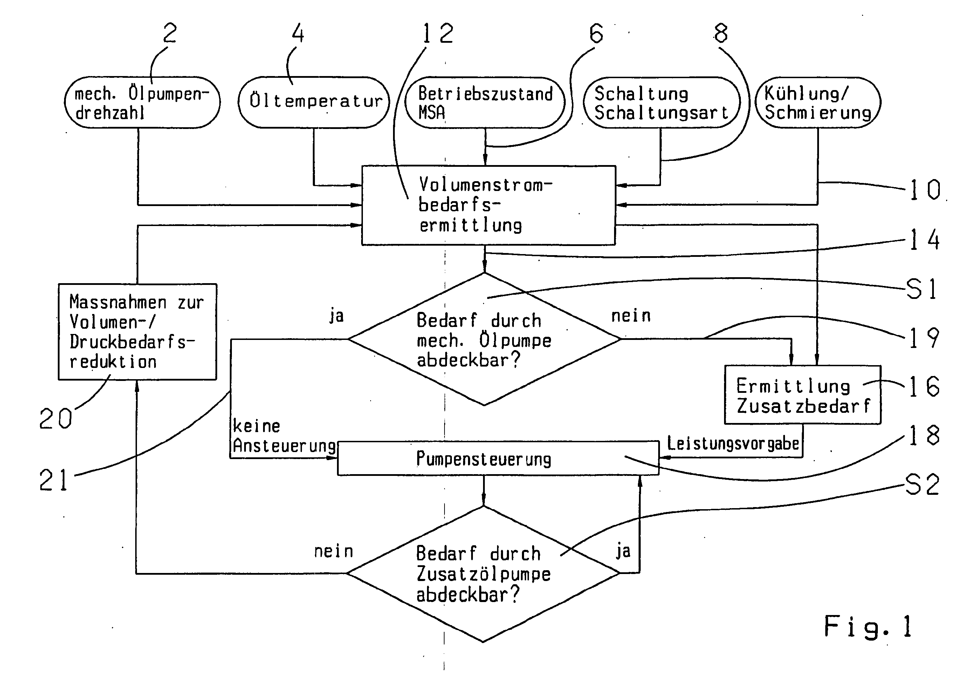

Das Vorhandensein und die Nutzung einer solchen elektrisch antreibbaren Zusatzölpumpe ist für den Betrieb eines Kraftfahrzeuges mit einer Motor-Stopp-Automatik zwar besonders sinnvoll, jedoch auch in solchen Kraftfahrzeugen mit Vorteil nutzbar, die ohne eine Motor-Stopp-Automatik betrieben werden. Neben der Betriebsart der Motor-Stopp-Automatik kann die elektrische Zusatzölpumpe daher auch in anderen Betriebsphasen energetisch günstig gemeinsam mit der Hauptölpumpe betrieben werden, oder sie kann unabhängig von der Volumenstromanforderung aus dem Automatgetriebe für andere Funktionen verwendet werden. Dem Automatgetriebe ist als Teil der Antriebssteuerungsvorrichtung ein elektronisches Steuerungsgerät zugeordnet, welches auch mit dem hydraulischen Steuerungsgerät als Teil einer hydraulischen Steuerungseinrichtung kommuniziert und mit diesem gegebenenfalls eine bauliche Einheit bildet. Dieses Steuerungsgerät ist hinsichtlich seiner Funktionen in der einzigen Zeichnungsfigur dargestellt.

Im elektronischen Steuergerät ist das Modell einer Volumenstrombedarfsermittlungseinrichtung implementiert, welches unter anderem Signale von Sensoren, Signale (beispielsweise Motordrehzahl) von einem Fahrzeugdaten-übertragungssystem (CAN-Bus) sowie die Ausgangssignale von anderen Modellberechnungen verarbeitet. Ein solches Modul ist vorzugsweise als elektronisches Datenverarbeitungsprogramm ausgebildet.

So wird über den Sensor 2 die aktuelle Drehzahl der mechanisch angetriebenen Hauptölpumpe sowie über den Sensor 4 die aktuelle Öltemperatur des Getriebeöls ermittelt, über einen Eingang 6 der aktuelle Betriebszustand der MSA, über einen weiteren Eingang 8 die Information über die aktuell anliegende Getriebeschaltstufe und die geplante Schaltungsart, sowie modellgestützt über einen weiteren Eingang 10 der aktuell erforderliche Ölvolumenstrom zur Erfüllung des Schmierbedarfs und der Kühlfunktion des Automatgetriebes erfasst. Aus diesen Informationen wird in einem Berechnungsblock 12 die Volumenstrombedarfswertmittlung für den aktuell erforderlichen Soll-Volumenstrom des Getriebeöls durchgeführt.

Dieser berechnete Wert des Soll-Volumenstroms wird über einen Ausgang 14 des Berechnungsblocks 12 dem logischen Schritt S1 zugeführt, in welchem überprüft wird, ob der dem Sollwert entsprechende Bedarf allein durch die mechanisch antreibbare Hauptölpumpe abzudecken ist. Der hierfür nötigen logischen Entscheidung liegt ein weiteres Modell zugrunde, welches mittels einer nicht gezeigten Fördervolumenstromermittlungseinrichtung den im aktuellen Betriebszustand von der Hauptölpumpe förderbaren Ist-Volumenstrom bestimmt.

Liefert der Vergleich im Schritt S1 ein logisches Nein, wonach der Bedarf an Getriebeöl nicht allein durch die Hauptölpumpe abzudecken ist, so wird in einem weiteren Berechnungsblock 16 der aktuell erforderliche Zusatzbedarf an Ölvolumenstrom unter Heranziehung des auch über den Ausgang 14 weitergereichten Wertes für den Soll-Volumenstrom ermittelt (Pfeil 19).

Im Ergebnis liefert dann der Berechnungsblock 16 einen Wert für eine Leistungsvorgabe an einen der Zusatzölpumpe zugeordneten Berechnungsblock 18 der Pumpensteuerung. Dieser Wert in Form einer elektrischen Spannung oder eines Steuersignals (CAN-Bus-Signal) bildet über den für jeden Pumpentyp bekannten Zusammenhang zwischen der Pumpendrehzahl, der Öltemperatur und dem gefördertem Volumen den förderbaren Ölvolumenstrom der Zusatzölpumpe. Der Wert für den von der Zusatzölpumpe förderbaren Ölvolumenstrom wird einem logischen Schritt S2 zugeführt. Dort wird geprüft, ob der im Berechnungsblock 16 ermittelte Zusatzbedarf über die elektrische Zusatzpumpe förderbar ist.

Liefert dieser Vergleich ein logisches Nein, so wird dieses Vergleichsergebnis einem Berechnungsblock 20 zugeführt, in dem Maßnahmen zur Reduktion des aktuellen Volumen- bzw. Druckbedarfes des Automatgetriebes auslöst werden.

Liefert die Vergleichsoperation im Schritt S1 ein logisches Ja, so erfolgt keine Ansteuerung der Pumpensteuerung im Berechnungsblock 18 (siehe Pfeil 21). Ergibt die Vergleichsoperation im Schritt S2, dass der im Berechnungsblock 16 ermittelte Zusatzbedarf hinsichtlich des Ölvolumenstroms von der elektrischen Zusatzölpumpe befriedigt werden kann, so wird kein Wert an den Berechnungsblock 20 ausgegeben.

Für den Fall, dass der Berechnungsblock 20 angesteuert wird, wird in die Steuerstrategie des Automatgetriebes eingegriffen. Hierbei wird insbesondere differenziert nach den jeweils herrschenden Betriebsbedingungen von einem oder mehreren der Verursacher für den Versorgungsbedarf in die Steuerstrategie eingegriffen. Eine Maßnahme ist zum Beispiel der Eingriff in die Befüllung eines hydraulischen Kupplungsaktuators durch ein Herabsetzen des Kupplungsbefüllungsdruckes, welches eine leicht verlängerte Befüllzeit bei gleichzeitiger Veränderung der Spontanität ergibt.

Während durch diese Maßnahme eventuell für den Fahrer spürbar in die Getriebesteuerung eingegriffen wird, können durch andere Maßnahmen zum Beispiel Zulässigkeitsgrenzen für den Getriebebetrieb kurzzeitig so weit verschoben werden, dass der aktuell erforderliche Soll-Volumenstrom noch als lieferbar bewertet wird. So kann in Abhängigkeit von weiteren Randbedingungen, wie der aktuellen Lufttemperatur, der Kühlwassertemperatur und gegebenenfalls eines Fahrerprofils hinsichtlich dessen Fahreigenschaften der Bedarf für die Ölkühlung zurückgesetzt werden.

Für die zuvor beschriebene Antriebssteuerungsvorrichtung kommt es nicht darauf an, dass über den Eingang 6 in den Berechnungsblock 12 in jedem Fall der Betriebszustand Motor-Aus gemeldet wird, bevor die weiteren Schritte eingeleitet werden. Vielmehr kann beispielsweise für Getriebeschaltungen in einem niedrigen Drehzahlbereich bei laufendem Verbrennungsmotor der von der Hauptölpumpe lieferbare Volumenstrom bzw. Druck zu gering sein. In einem solchen Fall wird die Zusatzölpumpe auch außerhalb des eigentlichen MSA-Betriebes mit Vorteil eingesetzt.

Auch lässt sich die elektrische Zusatzölpumpe in weiten Betriebsbereichen dazu nutzen, Spitzenlasten abzudecken und dadurch die Hauptölpumpe zu entlasten. Diese kann dadurch oft geringer dimensioniert werden als üblich, was im Fahrbetrieb zu geringeren Pumpenaufnahmedrehmomenten und einer entsprechenden Kraftstoff ersparnis führt.

In einer alternativen Ausgestaltung der Erfindung kann es für eine Adaption von Toleranzen, Verschleiß und/oder Defekten im Automatgetriebe vorteilhaft sein, als Rückführgröße, ob der modellierte Versorgungsbedarf für Getriebeöl mit dem tatsächlich benötigten Bedarf zusammenpasst, den mittels eines Drucksensors erfassten Druckverlauf im Getriebeöl zu verwenden.

### Bezugszeichen

- 2: Sensor
- 4: Sensor
- 6: Eingang
- 8: Eingang
- 10: Eingang
- 12: Berechnungsblock
- 14: Ausgang
- 16: Berechnungsblock
- 18: Berechnungsblock
- 19: Pfeil von S1 zu 16,
- 20: Berechnungsblock
- 21: Pfeil von S1 zu 18

- S1: Schritt
- S2: Schritt

## Patentansprüche

1. Antriebssteuerungsvorrichtung eines Automatgetriebes eines Kraftfahrzeuges, wobei das Kraftfahrzeug ein Automatgetriebe mit einer verbrennungsmotorisch antreibbaren Hauptölpumpe sowie eine elektrisch antreibbare Zusatzölpumpe aufweist, und mit einer hydraulischen Steuerungseinrichtung für das Automatgetriebe, mit einer Volumenstrombedarfsermittlungseinrichtung zur Bestimmung des im aktuellen Betriebszustand des Automatgetriebes und des Kraftfahrzeugs notwendigen ölhydraulischen Soll-Volumenstroms auf der Basis einer Öltemperatur im Automatgetriebe ausgestattet ist, **dadurch gekennzeichnet dass,** die steuereinrichtung mit einer Fördervolumenstromermittlungseinrichtung zur Bestimmung des im aktuellen Betriebszustand des Automatgetriebes und des Kraftfahrzeugs von der Hauptölpumpe und/oder der Zusatzölpumpe förderbaren Ist-Volumenstroms, und mit einer Soll-Volumenstrom-Beeinflussungseinrichtung zur Absenkung des Soll-Volumenstromes zumindest auf den aktuell förderbaren Ist-Volumenstrom, falls der aktuell förderbare Ist-Volumenstrom einen Wert aufweist, der unterhalb des Wertes für den aktuellen Soll-Volumenstrom liegt, ausgestattet ist.

2. Antriebssteuerungsvorrichtung nach Anspruch 1, **dadurch gekennzeichnet, dass** diese eine Steuerungseinrichtung für eine Motor-Stopp-Automatik (MSA) zum automatisierten Abstellen des Verbrennungsmotors in bestimmten Betriebszuständen des Kraftfahrzeuges aufweist.

3. Verfahren zur Antriebssteuerung eines Automatgetriebes eines Kraftfahrzeuges, wobei das Kraftfahrzeug über ein Automatgetriebe mit einer verbrennungsmotorisch antreibbaren Hauptölpumpe und eine elektrisch antreibbare Zusatzölpumpe verfügt, sowie mit einer hydraulischen Steuerungseinrichtung für das Automatgetriebe ausgestattet ist, **dadurch gekennzeichnet, dass** der in einer aktuellen Betriebssituation notwendige ölhydraulische Soll-Volumenstrom des Automatgetriebes auf der Basis einer Öltemperatur im Automatgetriebe bestimmt wird, dass der von der Hauptölpumpe und/oder der Zusatzölpumpe förderbare Ist-Volumenstrom ermittelt wird, und dass der Wert des Soll-Volumenstromes zumindest auf den aktuell förderbaren Ist-Volumenstrom abgesenkt wird, falls der aktuell förderbare Ist-Volumenstrom einen Wert aufweist, der unterhalb des Wertes für den aktuellen Soll-Volumenstrom liegt.

4. Verfahren nach Anspruch 3, **dadurch gekennzeichnet, dass** die Bestimmung des Soll-Volumenstromes auf der Basis der Drehzahl der mechanisch antreibbaren Hauptölpumpe erfolgt.

5. Verfahren nach Anspruch 3 oder 4, **dadurch gekennzeichnet, dass** die Bestimmung des Soll-Volumenstromes auf der Basis des aktuellen Betriebszustandes einer Motor-Stopp-Automatik erfolgt.

6. Verfahren nach wenigstens einem der Ansprüche 3 bis 5, **dadurch gekennzeichnet, dass** die Bestimmung des Soll-Volumenstromes auf der Basis der von der hydraulischen Steuervorrichtung durchzuführenden Schaltungen des Automatgetriebes erfolgt.

7. Verfahren nach wenigstens einem der Ansprüche 3 bis 6, **dadurch gekennzeichnet, dass** die Bestimmung des Soll-Volumenstromes auf der Basis der notwendigen Kühlung und/oder Schmierung des Automatgetriebes erfolgt.

8. Verfahren nach wenigstens einem der Ansprüche 3 bis 7, **dadurch gekennzeichnet, dass** die Soll-Volumenstrom-Beeinflussungseinrichtung zur Absenkung des Soll-Volumenstromes einen Kupplungsbefüllungsdruck für die Befüllung eines hydraulischen Stellgliedes einer dem Automatgetriebe zugeordneten Kupplung absenkt.

9. Verfahren nach wenigstens einem der Ansprüche 3 bis 8, **dadurch gekennzeichnet, dass** die Soll-Volumenstrom-Beeinflussungseinrichtung zur Absenkung des Soll-Volumenstromes Zulässigkeitsgrenzen für der Volumenstrombedarfsermittlungseinrichtung zugeführte Signale bzw. Werte verschiebt.

## Claims

1. Drive control apparatus of an automated gearbox of a motor vehicle, the motor vehicle having an automated gearbox with a main oil pump which can be driven by internal combustion engine and an additional oil pump which can be driven electrically, and being equipped with a hydraulic control device for the automated gearbox, and with a volumetric-flow requirement detection device for determining the oil-hydraulic setpoint volumetric flow on the basis of an oil temperature in the automated gearbox, which oil-hydraulic setpoint volumetric flow is necessary in the current operating state of the automated gearbox and the vehicle, **characterized in that** the control device is equipped with a delivery volumetric-flow detection device for determining the actual volumetric flow which can be delivered by the main oil pump and/or the additional oil pump in the current operating state of the automated gearbox and the motor vehicle, and with a setpoint volumetric-flow influencing device for lowering the setpoint volumetric flow at least to the actual volumetric flow which can currently be delivered, if the actual volumetric flow which can currently be delivered has a value which lies below the value for the current setpoint volumetric flow.

2. Drive control apparatus according to Claim 1, **characterized in that** it has a control device for an engine stop device for switching off the internal combustion engine in an automated manner in certain operating states of the motor vehicle.

3. Method for the drive control of an automated gearbox of a motor vehicle, the motor vehicle having an automated gearbox with a main oil pump which can be driven by internal combustion engine and an additional oil pump which can be driven electrically, and being equipped with a hydraulic control device for the automated gearbox, **characterized in that** the oil-hydraulic setpoint volumetric flow of the automated gearbox necessary in a current operating situation is determined on the basis of an oil temperature in the automated gearbox, **in that** the actual volumetric flow which can be delivered by the main oil pump and/or the additional oil pump is detected, and **in that** the value of the setpoint volumetric flow is lowered at least to the actual volumetric flow which can currently be delivered, if the actual volumetric flow which can currently be delivered has a value which lies below the value for the current setpoint volumetric flow.

4. Method according to Claim 3, **characterized in that** the setpoint volumetric flow is determined on the basis of the speed of the main oil pump which can be driven mechanically.

5. Method according to Claim 3 or 4, **characterized in that** the setpoint volumetric flow is determined on the basis of the current operating state of an engine stop device.

6. Method according to at least one of Claims 3 to 5, **characterized in that** the setpoint volumetric flow is determined on the basis of those shifting operations of the automated gearbox which are to be carried out by the hydraulic control apparatus.

7. Method according to at least one of Claims 3 to 6, **characterized in that** the setpoint volumetric flow is determined on the basis of the necessary cooling and/or lubrication of the automated gearbox.

8. Method according to at least one of Claims 3 to 7, **characterized in that**, in order to lower the setpoint volumetric flow, the setpoint volumetric-flow influencing device lowers a clutch filling pressure for filling a hydraulic actuator of a clutch which is assigned to the automated gearbox.

9. Method according to at least one of Claims 3 to 8, **characterized in that**, in order to lower the setpoint volumetric flow, the setpoint volumetric-flow influencing device moves permissibility limits for values or signals which are fed to the volumetric-flow requirement detection device.

## Revendications

1. Dispositif de commande d'entraînement d'une boîte de vitesses automatique d'un véhicule automobile, dans lequel le véhicule automobile présente une boîte de vitesses automatique avec une pompe à huile principale pouvant être entraînée par un moteur à combustion ainsi qu'une pompe à huile auxiliaire pouvant être entraînée électriquement, et est équipé d'un dispositif de commande hydraulique pour la boîte de vitesses automatique, d'un dispositif de détermination du besoin en débit volumique pour déterminer le débit volumique de consigne d'huile hydraulique nécessaire dans l'état de fonctionnement actuel de la boîte de vitesses automatique et du véhicule automobile, sur la base d'une température d'huile dans la boîte de vitesses automatique, **caractérisé en ce que** le dispositif de commande est équipé d'un dispositif de détermination du débit refoulé pour déterminer le débit volumique instantané pouvant être refoulé par la pompe à huile principale et/ou par la pompe à huile auxiliaire dans l'état de fonctionnement actuel de la boîte de vitesses automatique et du véhicule automobile, et d'un dispositif pour influencer le débit volumique de consigne afin d'abaisser le débit volumique de consigne au moins jusqu'au débit volumique instantané pouvant être refoulé actuellement, si le débit volumique instantané pouvant être refoulé actuellement présente une valeur qui est inférieure à la valeur du débit volumique de consigne actuel.

2. Dispositif de commande d'entraînement selon la revendication 1, **caractérisé en ce que** celui-ci présente un dispositif de commande pour un système automatique d'arrêt du moteur (MSA) pour couper automatiquement le moteur à combustion interne dans des états de fonctionnement déterminés du véhicule automobile.

3. Procédé pour commander l'entraînement d'une boîte de vitesses automatique d'un véhicule automobile, le véhicule automobile disposant d'une boîte de vitesses automatique avec une pompe à huile principale pouvant être entraînée par un moteur à combustion et une pompe à huile auxiliaire pouvant être entraînée électriquement, et étant équipé d'un dispositif de commande hydraulique pour la boîte de vitesses automatique ; **caractérisé en ce que** le débit volumique de consigne d'huile hydraulique de la boîte de vitesses automatique nécessaire dans une situation de fonctionnement actuelle est déterminé sur la base d'une température d'huile dans la boîte de vitesses automatique, **en ce que** le débit volumique instantané pouvant être refoulé par la pompe à huile principale et/ou la pompe à huile auxiliaire est déterminé, et **en ce que** la valeur du débit volumique de consigne est abaissée jusqu'à au moins le débit volumique instantané pouvant être refoulé actuellement, si le débit volumique instantané pouvant être refoulé actuellement présente une valeur qui est inférieure à la valeur du débit volumique de consigne actuel.

4. Procédé selon la revendication 3, **caractérisé en ce que** la détermination du débit volumique de consigne s'effectue sur la base du régime de la pompe à huile principale pouvant être entraînée mécaniquement.

5. Procédé selon la revendication 3 ou 4, **caractérisé en ce que** la détermination du débit volumique de consigne s'effectue sur la base de l'état de fonctionnement actuel d'un système automatique d'arrêt du moteur.

6. Procédé selon au moins l'une quelconque des revendications 3 à 5, **caractérisé en ce que** la détermination du débit volumique de consigne s'effectue sur la base des changements de vitesse de la boîte de vitesses automatique à effectuer par le dispositif de commande hydraulique.

7. Procédé selon au moins l'une quelconque des revendications 3 à 6, **caractérisé en ce que** la détermination du débit volumique de consigne s'effectue sur la base du refroidissement et/ou de la lubrification nécessaires de la boîte de vitesses automatique.

8. Procédé selon au moins l'une quelconque des revendications 3 à 7, **caractérisé en ce que** le dispositif pour influencer le débit volumique de consigne, pour abaisser le débit volumique de consigne, abaisse une pression de remplissage d'embrayage pour le remplissage d'un actionneur hydraulique d'un embrayage associé à la boîte de vitesses automatique.

9. Procédé selon au moins l'une quelconque des revendications 3 à 8, **caractérisé en ce que** le dispositif pour influencer le débit volumique de consigne pour abaisser le débit volumique de consigne déplace des limites d'admissibilité pour des signaux ou des valeurs acheminés au dispositif de détermination du besoin en débit volumique.
